# EUROPEAN PATENT SPECIFICATION

(11) **EP 3 179 686 B1**
(45) Date of publication and mention of the grant of the patent: **05.02.2020**
(21) Application number: 14895064.5
(22) Date of filing: 16.10.2014
(51) Int. Cl.: H04W 4/00, H04W 4/50, H04L 12/24, H04L 29/12, H04L 29/06

(54) **IMS, AND METHOD AND APPARATUS FOR PROVISIONING SERVICE IN IMS**
IMS UND VERFAHREN UND VORRICHTUNG ZUR BETRIEBSDATENLIEFERUNG IN IMS
SOUS-SYSTÈME MULTIMÉDIA DE PROTOCOLE INTERNET (IMS), ET PROCÉDÉ ET APPAREIL POUR FOURNIR UN SERVICE DANS UN IMS

(30) Priority: 17.06.2014 CN 201410271565
(43) Date of publication of application: 14.06.2017
(73) Proprietor: ZTE Corporation, Shenzhen, Guangdong 518057 (CN)
(72) Inventor: GAO, Yang, Shenzhen Guangdong 518057 (CN); ZHANG, Lu, Shenzhen Guangdong 518057 (CN); WANG, Mengxiao, Shenzhen Guangdong 518057 (CN)
(74) Representative: Hervouet-Malbec, Sylvie
(86) International application number: PCT/CN2014/088775
(87) International publication number: WO 2015/192559

(56) References cited:
- EP-A1- 2 442 597
- EP-A1- 2 525 528
- WO-A1-2011/003454
- CN-A- 103 200 153
- CN-A- 103 391 539
- US-A1- 2013 080 648

## Description

### Technical Field

The present invention relates to the communication field, and in particular, to an Internet Protocol Multimedia Subsystem (referred to as IMS), and a method and apparatus for provisioning a service in the IMS.

### Background

The IMS is the development direction of the multimedia communication in the future, and it is also the most important part of the next generation network. It is a subsystem supporting the IP multimedia services proposed by the third generation partnership project (referred to as 3GPP), of which the marked features is adopting the Session Initiation Protocol (referred to as SIP) system, the communication has nothing to do with the access mode and the subsystem has multiple capabilities, such as, separation of control functions and the bearing ability of multiple multimedia services, separation of call and session, separation of application and serving, separation of service and network, and service integration of mobile network and Internet, etc.

The IMS is a brand-new form of the multimedia service, which can meet more innovative and more diverse multimedia service requirements of the users. At present, the IMS is regarded as the core technology of next generation network, and also is an important mode for differentiation services, such as, the integration of the mobile network and the fixed network, the introduction of voice, data and video, and the integration of the three, etc.

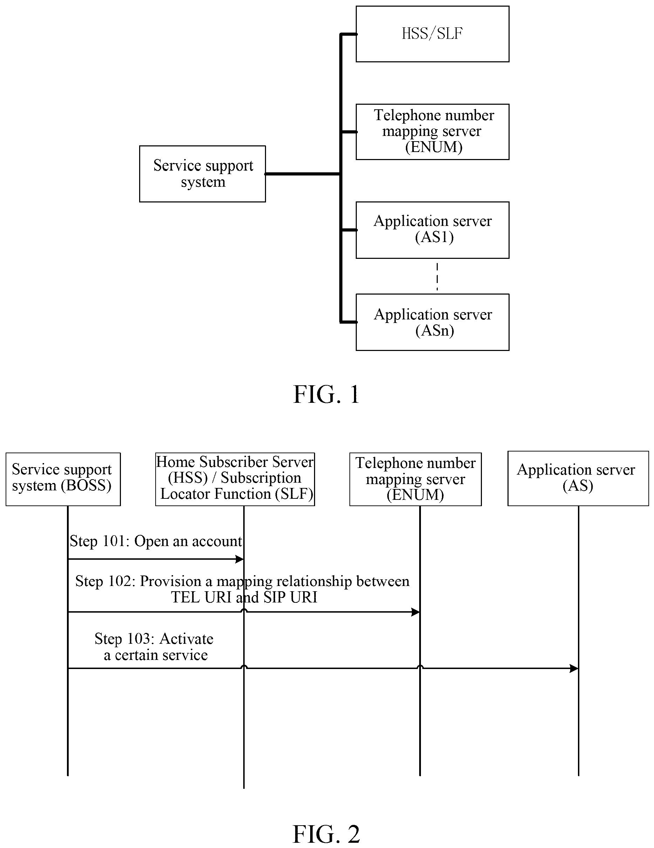

Before using the IMS service, the user needs to provision the IMS service; in the existing IMS service provisioning technologies, multiple network elements are required to be involved, as shown in FIG. 1, including multiple network elements, such as, Home Subscriber Server (referred to as HSS), Subscription Locator Function (referred to as SLF),Telephone Number Mapping (referred to as ENUM) and Application Server (referred to as AS), etc., and service support system (Business and Operation Support System, referred to as BOSS).

By taking that the user provisions the voice service provided by the Multimedia Telephony Application Server (referred to as MMTel AS) as an example, as shown in FIG. 2; a flow chart of provisioning IMS service based on the structure diagram shown in FIG. 1 includes the following steps.

In step 101, when a user initiates a service provisioning request for provisioning the MMTel voice service, the service support system needs to configure user data required for the user to provision the MMTel voice service at the HSS.

In popular cultural, this step 101 is the process of opening an account in the HSS by the user.

The user data include: IP Multimedia Public Identity (referred to as IMPU), IP Multimedia Private Identity (referred to as IMPI), authentication password, IMS password, IMS core network password and Initial Filter Condition (referred to as IFC), etc.

After the HSS configures the user data for the user, the user can only register to the IMS, and cannot use the MMTel voice service of the IMS.

In step 102, the service support system provisions a mapping relationship between TEL Uniform Resource Identifier (referred to as TEL URI) and Session Initiation Protocol URI (referred to as SIP URI) for the user in the ENUM.

The mapping relationship between the TEL URI and the SIP URI is used to support the routing capability of the user as a called party in the core network.

In step 103, the service support system binds the user data configured for the user and the user identity of that user into the MMTel AS, to complete the activation of the MMTel voice service.

Now, the user data required by Multimedia Telephony (referred to as MMTel) voice service have been written into various key elements involved in provisioning the MMTel voice service, and the user can login the IMS and use the corresponding MMTel voice service. Since then, the MMTel AS can feed a service provisioning success message back to the service support system, and the services support system sends a short message to the user for double confirmation, and till now, the user completes provisioning of the MMTel voice service.

In the existing IMS service provisioning process, the user needs to apply for provisioning the IMS service through the service support system, and the service support system generates corresponding user data, such as, IMPI, IMPU, IFC, etc., for the user after receiving the IMS service provisioning request of the user, and writes the data into the HSS, and then further needs to complete provisioning of ENUM and AS; if any of the above links fails, the network element is failed, or the service support system encounters an unexpected order which leads to sudden increasing of the service volume, all will cause failure or delay of provisioning the IMS service. On the other hand, the existing IMS service provisioning system needs to store the user or service data on multiple network elements, resulting in that the service or user data are too scattered, which is not conducive to service expansion.

In view of the above technical problems of the conventional art, there is no effective solution till now.

EP2525528A1 and WO 2011/003454 A1 represent relevant prior art.

### Summary of the Invention

Aiming at the technical problems involved in the existing IMS network service provisioning process in the existing technology, for example, more network elements lead to low efficiency and poor reliability of the provisioning, which is against with the service expansion, etc., the present invention provides a service provisioning method and apparatus in the IMS as defined in the independent claims, to at least solve the above technical problems.

In order to achieve the above objective, an internet protocol (IP) multimedia subsystem (IMS) according to independent claim 5 is provided according to one aspect of the present invention, including: a service support system, arranged to provision all provisioning information required by various network elements during a provisioning process of a designated IMS service to a provisioning transaction management entity; the provisioning transaction management entity, arranged to store the provisioning information and provide the provisioning information to the various network elements during the provisioning process; and the various network elements, arranged to directly or indirectly request the provisioning information from the provisioning transaction management entity and perform information interaction between the network elements to realize service provisioning.

Alternatively, the various network elements include: a user subscription data storage entity, arranged to read user data stored in the provisioning transaction management entity during the provisioning process; an application server, arranged to read service data stored in the provisioning transaction management entity directly or through the user subscription data storage entity during the provisioning process, and realize a corresponding service according to the service data; and a telephone number mapping (ENUM) server or a domain name server (DNS), arranged to read a mapping relationship between a telephone uniform resource identifier (TEL URI) and a session initiation protocol uniform resource identifier (SIP URI) stored in the provisioning transaction management entity and DNS data during the provisioning process.

Alternatively, the user subscription data storage entity is further arranged to receive a user authorization request (UAR) sent by a serving call session control function (S-CSCF) entity according to a received user registration request, and send a query request used for querying user information to the provisioning transaction management entity, and send a response message of the UAR request to the S-CSCF entity, herein, the response message carries the user information.

Alternatively, the application server is further arranged to receive a service request from a server of the S-CSCF entity; and send a query request used for obtaining service data to the provisioning transaction management entity directly or through the user subscription data storage entity; and/or, the user subscription data storage entity is further arranged to receive a request message from the S-CSCF entity, and request the service data from the provisioning transaction management entity, herein, the S-CSCF entity sends the request message after successful registration of the user.

Alternatively, the provisioning transaction management entity is further arranged to negotiate with the various network elements to determine a format of the provisioning information, herein, the determined format after negotiation is consistent with a format of provisioning information required by the various network elements.

In order to achieve the above objective, a service provisioning method according to independent claim 1 in an internet protocol (IP) multimedia subsystem (IMS) is further provided according to another aspect of the present invention, realized through configuring a provisioning transaction management entity in the IMS, herein, provisioning information required by various network elements in the IMS during a provisioning process of a designated IMS service is stored in the provisioning transaction management entity, and the method includes: during a service provisioning process, the provisioning transaction management entity receiving query requests of various network elements in the IMS; and the provisioning transaction management entity sending provisioning information corresponding to the query requests to the various network elements.

Alternatively, the provisioning information stored in the provisioning transaction management entity is obtained by the following mode: storing the provisioning information of the various network elements into the provisioning transaction management entity through a service support system in the IMS.

Alternatively, a format of the provisioning information stored in the provisioning transaction management entity is same with that of the information required by the various network elements during a provisioning process of an IMS service.

Alternatively, the provisioning information includes at least one of the following: user data obtained from the service support system in the IMS, data obtained from a telephone number mapping (ENUM) server or a domain name server (DNS), and service information obtained from an application server (AS).

In order to achieve the above objective, a service provisioning apparatus according to independent claim 4 in an internet protocol (IP) multimedia subsystem (IMS) is further provided according to another aspect of the present invention, including: a receiving module, configured in a provisioning transaction management entity, and arranged to: during a service provisioning process, receive query requests of various network elements in an internet protocol (IP) multimedia subsystem (IMS), herein, provisioning information required by the various network elements in the IMS during a provisioning process of a designated IMS service is stored in the provisioning transaction management entity; and a sending module, configured in the provisioning transaction management entity, and arranged to send provisioning information corresponding to the query requests to the various network elements.

Through the present invention, the technical means that all information required by provisioning service is stored into the provisioning transaction management entity and the information required by provisioning the service is obtained from the provisioning transaction management entity, is used, thus the technical problems, such as low provisioning efficiency, poor reliability, and service expansion inconvenience, etc., caused by more network elements involved in the existing IMS service provisioning process, are solved, so that performance of an IMS network is improved.

### Brief Description of Drawings

The accompanying drawings described herein are used to provide further understanding for the present invention and constitute a part of the present application. The illustrated embodiments of the present invention and the description thereof are used to explain the present invention, rather than constituting an inappropriate limitation on the present invention. Herein:
FIG. 1 is an architecture schematic diagram of provisioning an IMS service according to the related technology;
FIG. 2 is a flow chart of provisioning an IMS service according to the related technology;
FIG. 3 is a flow chart of a service provisioning method in an IMS according to an embodiment of the present invention;
FIG. 4 is a structure block diagram of a service provisioning apparatus in an IMS according to an embodiment of the present invention;
FIG. 5 is another flow chart of a service provisioning method in an IMS according to an embodiment of the present invention;
FIG. 6 is another structure block diagram of a service provisioning apparatus in an IMS according to an embodiment of the present invention;
FIG. 7 is a structure block diagram of an IMS according to an alternative embodiment of the present invention;
FIG. 8 is a structure schematic diagram of an IMS according to an alternative embodiment of the present invention;
FIG. 9 is a flow chart of provisioning an IMS service according to an embodiment of the present invention;
FIG. 10 is a schematic diagram of a user registration process according to an embodiment of the present invention;
FIG. 11 is a schematic diagram of another user registration process according to an embodiment of the present invention;
FIG. 12 is a schematic diagram of still another user registration process according to an embodiment of the present invention.

### Specific Embodiments

The present invention is described in detail with reference to the accompanying drawings and in combination with embodiments hereinafter. It should be illustrated that, in the case of not conflicting, the embodiments in the present application and features in these embodiments can be combined with each other.

Aiming at the shortcoming, that there are many provisioning network elements, the provisioning efficiency is low, the provisioning system is complex and is prone to failure, in the existing IMS service provisioning process, the present invention provides a method, herein, through concentrating the service data provisioning to a single network element, the newly added network element (i.e. a provisioning transaction management entity) is enabled to perform the integrated management and transaction management control on the complex provisioning; and the data format of the provisioning process is specified, the efficiency and the extendibility of the IMS service provisioning process, and the reliability of the IMS service provisioning system are improved.

### Embodiment one

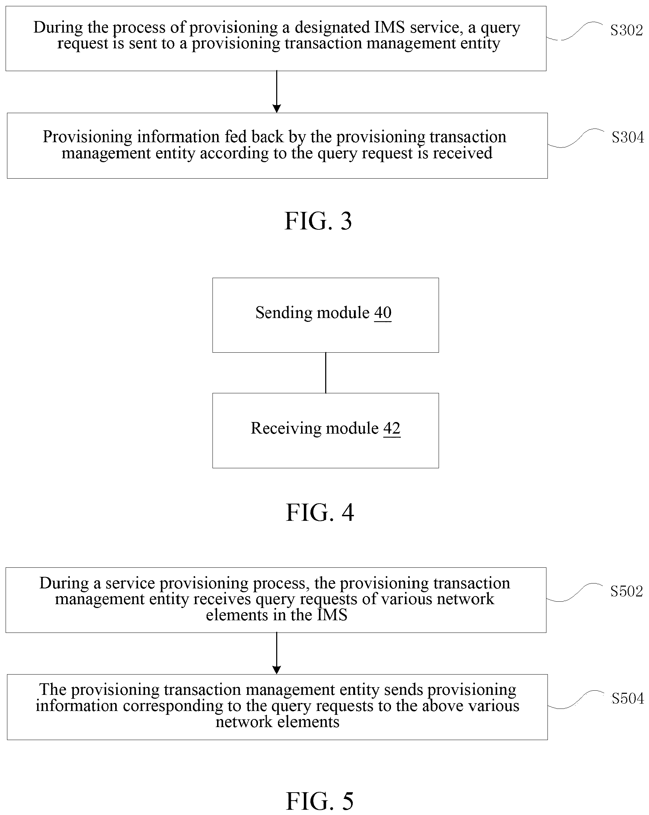

FIG. 3 is a flow chart of a service provisioning method in an IMS according to an embodiment of the present invention. The method is realized through setting a provisioning transaction management entity in the IMS, and provisioning information required by various network elements in the IMS during a process of provisioning a designated IMS service is stored in the provisioning transaction management entity; as shown in FIG. 3, the method includes the following processing steps S302-S304.

In step S302, during the process of provisioning the designated IMS service, a query request is sent to the provisioning transaction management entity.

In step S304, the provisioning information fed back by the provisioning transaction management entity according to the query request is received.

Through the above various processing steps, since all the information required by the service provisioning is stored in the newly added provisioning transaction management entity, the provisioning transaction management function (Operating Transaction Manager) performs the integrated management and transaction management control on the complex provisioning. In this way, various network elements involved in the service provisioning in the IMS obtain the information required by the service provisioning from the provisioning transaction management entity, and thus the technical problems, such as low provisioning efficiency, poor reliability, and service expansion inconvenience, etc., caused by the greater quantity of network elements involved in the existing IMS service provisioning process, can be solved, so that performance of an IMS network is improved.

It should be stated that the above designated service may include one or more of all IMS services, or all IMS services. The execution body of the above steps can be the network elements involved in the IMS service provisioning process, such as AS, S-CSCF, HSS etc.

Before step S304, a service support system in the IMS is required to provision the information (i.e. the provisioning information) required by the various elements to the above provisioning transaction management entity, that is, information required by other network elements except the above provisioning transaction management entity is stored into the above provisioning transaction management entity through the service support system of the IMS.

In addition, aiming at the problem of data consistency in the existing technology, which derives waste data and even affects the system reliability and validity, the provisioning transaction management entity can negotiate with the various network elements to determine the information format required by above provisioning the IMS service, to enable the format of the provisioning information stored in the provisioning transaction management entity is same with that of the information required by the various network elements in the process of provisioning the IMS service. Herein, the above provisioning information includes at least one of the following: user data obtained from the service support system in the IMS, data obtained from an ENUM server, and service information obtained from an application server (AS). The above processing procedures can be expressed in the following form during the real application, but not limited to this.

In step 101, when a user initiates a service provisioning request, the service support system provisions basic data of the user to the provisioning transaction management entity. This kind of user data includes: IP Multimedia Public Identity (IMPU), IP Multimedia Private Identity (IMPI), authentication password, IMS password, IMS core network password and Initial Filter Condition (referred to as IFC), etc. After the user data are provisioned, the user can only register to the IMS, and cannot use any service of the IMS.

In step 102, the service support system provisions data related to the ENUM network element to the provisioning transaction management entity, and this kind of data includes a mapping relationship between TEL Uniform Resource Identifier (referred to as TEL URI) and Session Initiation Protocol URI (referred to as SIP URI).

The mapping relationship between the TEL URI and the SIP URI is used to support the routing capability when the user is a called party in the core network.

In step 103, the service support system provisions the service information related to the AS, such as, MMTel voice service, supplement service data, user attribute, etc., to the provisioning transaction management entity.

Till now, the user completes the provisioning of the service, and the user can use the corresponding MMTel voice service when the user can login the IMS.

In the present embodiment, a service provisioning apparatus in the IMS is further provided, and various modules involved in the apparatus can be realized by software or hardware; as shown in FIG. 4, the apparatus includes the following modules:
a sending module 40, arranged to, during a process of provisioning a designated internet protocol (IP) multimedia subsystem (IMS) service, send a query request to a provisioning transaction management entity in the IMS, herein, provisioning information required by various network elements in the IMS during the process of provisioning the designated IMS service is stored in the provisioning transaction management entity; and
a receiving module 42, connected to the sending module and arranged to receive the provisioning information fed back by the provisioning transaction management entity according to the query request.

Through the functions achieved by the above modules, all information required by the service provisioning can also similarly be stored in the provisioning transaction management entity. In this way, various network elements involved in the service provisioning in the IMS obtain the information required by the service provisioning from the provisioning transaction management entity, and thus solving the technical problems, such as low provisioning efficiency, poor reliability, and service expansion inconvenience, etc., caused by the greater quantity of network elements involved in the existing IMS service provisioning process.

As mentioned above, the various modules in the above embodiment can be realized by hardware. For example, they can be achieved by, but not limited to, the following modes: the sending module 40 and the receiving module 42 are located in a first processor and a second processor respectively; or, the sending module 40 and the receiving module 42 are located in a same processor.

### Embodiment two

In the present embodiment, another service provisioning method in an internet protocol (IP) multimedia subsystem (IMS) is further provided, the method is realized through configuring a provisioning transaction management entity in the IMS, herein, provisioning information required by various network elements in the IMS during a process of provisioning a designated IMS service is stored in the provisioning transaction management entity, and as shown in FIG. 5, the method includes the following steps.

In step S502, during a service provisioning process, the provisioning transaction management entity receives query requests of various network elements in the IMS.

In step S504, the provisioning transaction management entity sends provisioning information corresponding to the query requests to the above various network elements.

It needs to be stated that a time of receiving or sending information from the various network elements in the above processing steps can be a same time or different time, which is determined depending on different service provisioning processes.

In the present embodiment, the provisioning information stored in the provisioning transaction management entity can be obtained by, but not limited to, the following modes: storing the provisioning information of the above various network elements into the provisioning transaction management entity through a service support system in the IMS.

In an alternative embodiment, a format of the provisioning information stored in the provisioning transaction management entity is same with that of the information required by the above various network elements in a process of provisioning an IMS service.

The above provisioning information includes, but is not limited to, at least one of the following: user data obtained from the service support system in the IMS, data obtained from a telephone number mapping (ENUM) server or a domain name server (referred to as DNS), and service information obtained from an application server (AS). Thus, the above "various network elements" involved in the service provisioning process may include but are not limited to: service support system, AS, DNS and ENUM.

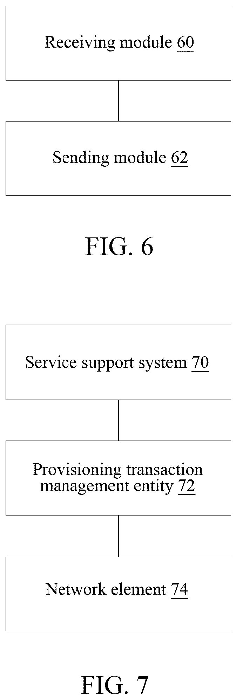

In order to realize the above method, the present embodiment further provides a service provisioning apparatus in the IMS; as shown in FIG. 6, the apparatus includes the following modules:
a receiving module 60, provided in a provisioning transaction management entity, and arranged to, during a service provisioning process, receive query requests of various network elements in an internet protocol (IP) multimedia subsystem (IMS), herein, provisioning information required by the various network elements in the IMS during a process of provisioning a designated IMS service is stored in provisioning transaction management entity; and
a sending module 62, connected to the receiving module 60, provided in the provisioning transaction management entity, and arranged to send provisioning information corresponding to the above query requests to the above various network elements.

The various modules in the above embodiment can be realized by hardware. For example, they can be achieved by, but not limited to, the following modes: the sending module 62 and the receiving module 60 are located in a first processor and a second processor respectively; or, the sending module 62 and the receiving module 60 are located in a same processor.

In the present embodiment, an IMS is further provided, and a provisioning transaction management entity is newly added in the IMS; as shown in FIG. 7, the IMS includes:
a service support system 70, arranged to provision all provisioning information required by various network elements during a provisioning process of a designated IMS service to a provisioning transaction management entity;
the provisioning transaction management entity 72, arranged to store the above provisioning information, and provide the above provisioning information to various network elements during the above provisioning process;
the various network elements 74, arranged to directly or indirectly request the above provisioning information from the provisioning transaction management entity and perform information interaction between the network elements to realize service provisioning.

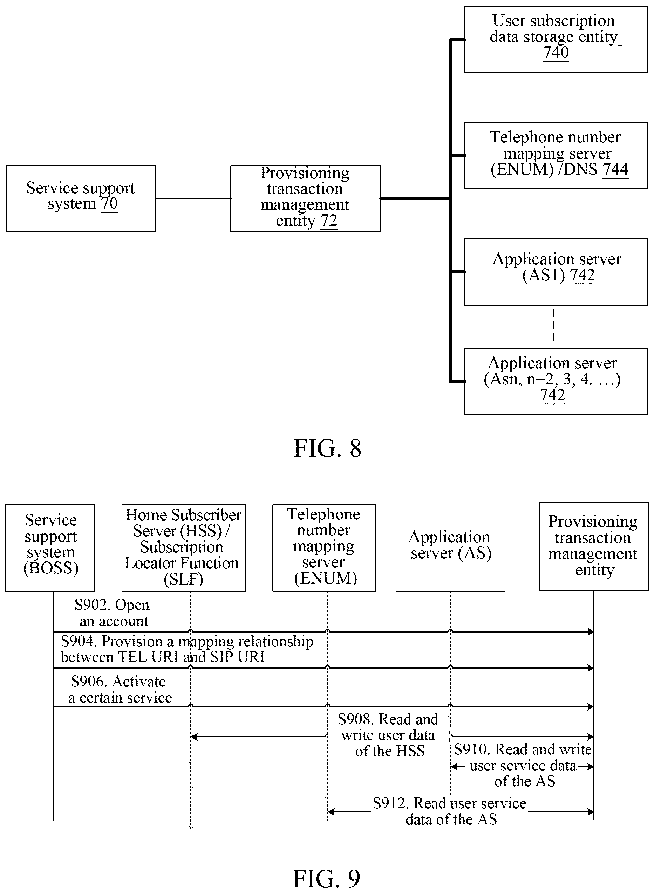

As shown in FIG. 8, the above various network elements can include, but not limited to, the following entity:
A user subscription data storage entity 740 (such as, HSS/SLF), arranged to read user data stored in the above provisioning transaction management entity during the above provisioning process; here, in an alternative example of an embodiment of the present invention, the user subscription data storage entity 740 is further arranged to receive a user authorization request (UAR) sent by a serving call session control function (S-CSCF) entity according to a received user registration request, and send a query request used for querying user information to the provisioning transaction management entity, and send a response message of the UAR request to the S-CSCF entity, herein, the response message carries the above user information;

An application server 742, arranged to read service data stored in the above provisioning transaction management entity directly or through the above user subscription data storage entity during the above provisioning process, and realize a corresponding service according to the service data; here, in an alternative example of an embodiment of the present invention, the application server 742 is further arranged to receive a service request from a server of the S-CSCF entity; and send a query request used for obtaining service data to the provisioning transaction management entity directly or through the user subscription data storage entity; and/or, the user subscription data storage entity 740 is further arranged to receive a request message from the S-CSCF entity, and request the service data from the provisioning transaction management entity, herein, the S-CSCF entity sends the request message after successful registration of the user;

A telephone number mapping (ENUM) server or a domain name server (DNS) 744, arranged to read a mapping relationship between a telephone uniform resource identifier (TEL URI) and a session initiation protocol uniform resource identifier (SIP URI) stored in the above provisioning transaction management entity and DNS data during the above provisioning process.

The further improvement to the above technical scheme by the embodiments of the present invention lies in that the provisioning transaction management entity is further arranged to negotiate with the various network elements to determine a format of the provisioning information, herein, the determined format after negotiation is consistent with a format of provisioning information required by the various network elements.

In order to better understand the above embodiments 1-2, they are illustrated in detail by combining with an alternative embodiment hereinafter.

### Embodiment three

In the alternative embodiment, it is illustrated by taking the above provisioning transaction management entity being the provisioning transaction management entity as an example, however it is not limited to this. The main design ideas of the following alternative embodiment lie in that: all provisioning data are uniformly stored in the provisioning transaction management entity, and there is no interface between the service support system and network elements except the provisioning transaction management entity; the data provisioned by the service support system is in a data format determined by negotiating with the network elements, and the provisioning transaction management entity does not need to perform the data format conversion; the provisioning transaction management entity provides interfaces for data adding, deleting, modifying and querying; the protocols used by the interfaces are not restricted, and the typical protocol is lightweight directory access protocol (referred to as LDAP). In the service processing procedures, the various network elements obtain data through interaction with the provisioning transaction management entity if the data are required to be used.

The IMS service provisioning architecture involved in the present embodiment can be based on the IMS as shown in FIG. 8, but is not limited to this; herein,
the service support system is responsible for uniformly provisioning various types of data required by the various network element (HSS, AS, ENUM/DNS, etc.) in the IMS to the provisioning transaction management entity, and the provisioning data format is required to be the data format required by the various network elements;
the provisioning transaction management entity uniformly stores the provisioning data of the various network elements in the IMS system, and the various network elements can read and write the provisioning data of the user through a unified interface, and provide a interface to allow adding, deleting, modifying and querying of the provisioning data.

The HSS/SLF is responsible for reading the basic data provisioned by the user stored in the provisioning transaction management entity, and also can be used as an agent of the AS to read and write the service data provisioned by the user stored in the provisioning transaction management entity.

The AS can read and write the service data provisioned by the user stored in the provisioning transaction management entity directly or indirectly through the HSS, and implement the corresponding service by using the service data.

The ENUM/DNS is responsible for reading a mapping relationship between TEL URI and SIP URI provisioned by the user stored in the provisioning transaction management entity and the DNS data.

FIG. 9 shows an improved IMS service provisioning process, which is illustrated by taking provisioning an MMTel voice service as an example, and the specific steps are as follows.

In step S902, when a user initiates a service provisioning request for provisioning the MMTel voice service, the service support system provisions basic data of the user to the provisioning transaction management entity. This kind of user data includes: IP Multimedia Public Identity (IMPU), IP Multimedia Private Identity (referred to as IMPI), authentication password, IMS password, IMS core network password and Initial Filter Condition (referred to as IFC), etc., and specific data definition is described in the 3GPP TS 29.228.

After the user data are provisioned, the user can only register to the IMS, and cannot use the MMTel voice service of the IMS.

In step S904, the service support system provisions data related to the ENUM network element to the provisioning transaction management entity, and this kind of data includes a mapping relationship between TEL Uniform Resource Identifier (referred to as TEL URI) and Session Initiation Protocol URI (referred to as SIP URI).

The mapping relationship between the TEL URI and the SIP URI is used to support the routing capability of the user as a called party in the core network.

In step S906, a certain service is activated; the service support system provisions the service data (the MMTel voice service data) to the provisioning transaction management entity in accordance with the data format required by the MMTel AS, for example, the data of the supplementary service are defined in the 3GPP TS 29.364:

```
 <?'xml version="1.0" encoding="UTF-8"?>
 <Sh-Data>
   <RepositoryData>
            <ServiceIndication>MMTEL-Services</ServiceIndication>
            <SequenceNumber>0</SequenceNumber>
            <ServiceData>
                <MMTelServices
                xmlns:cp="urn:ietf:params:xml:ns:common-policy"
                xmlns:ss="http://uri.etsi.org/ngn/params/xml/simservs/xcap">
                    <version>1</version>
                    <complete-originating-identity-presentation>
                        <originating-identity-presentalion active="true"/>
                        <operator-originating-identity-presentation
                        authorized="true">
                        <restriction-override>override-inactive</restriction-override>
                        </operator-originating-identity-presentation>
                    </complete-originating-identity-presentation>
                </MMTelServices>
            </ServiceData>
       </RepositoryData>
   </Sh-Data>
```

In step S908, the user service data of the HSS are read and written.

In step S910, the user service data of the AS are read and written.

In step S912, the user service data of the AS are read and written.

Till now, the user completes provisioning the MMTel voice service.

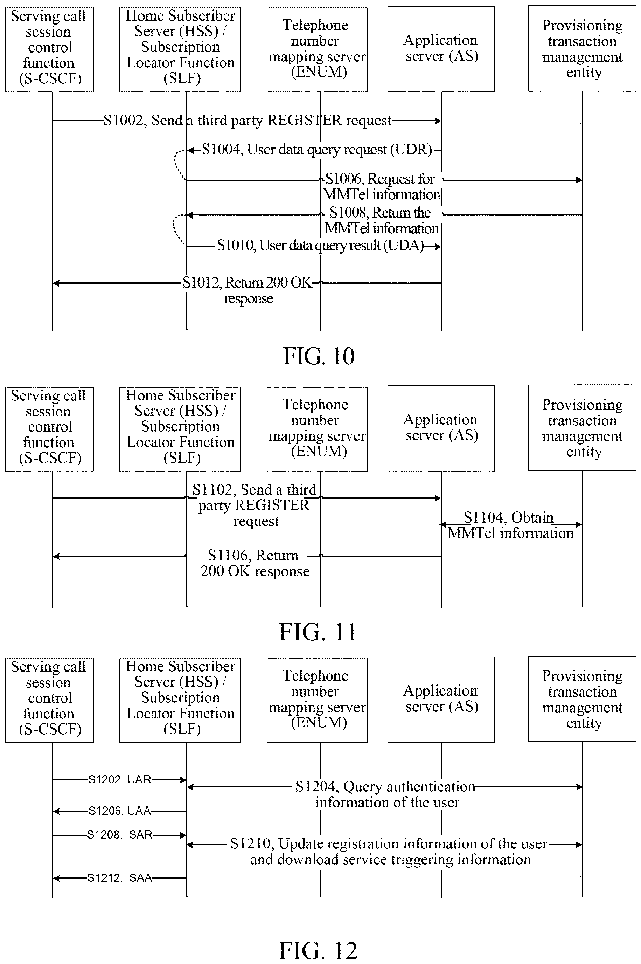

FIG. 10 shows the user registration process after the service provisioning, by taking provisioning the MMTel voice service as an example, herein, the MMTel AS read data from the provisioning transaction management entity indirectly through the HSS. Specific steps are as follows.

Similar to FIG. 9, the following steps are executed firstly: when the user can login the IMS, the serving call session control function entity (Serving-CSCF, referred to as S-CSCF) receives a registration request of the user, and sends a user authorization request (referred to as UAR) for obtaining the user information to the HSS (referring to 3GPP TS 29.228), to request for authenticating the data; the HSS sends a query request to the provisioning transaction management entity, to obtain the information required in the UAR request; the HSS returns a UAA response to the S-CSCF, and the S-CSCF continues the normal registration process; when the user registers successfully, the S-CSCF sends the SAR request to the HSS, to request for service triggering data of the user, such as, iFC, etc.; the HSS sends the query request to the provisioning transaction management entity, to obtain the information required in the SAR request; the HSS returns a result to the S-CSCF.

And then the steps shown in FIG. 10 are executed.

In step S1002, the S-CSCF sends an SIP REGISTER request to the MMTel AS for third party registration.

In step S1004, the MMTel AS sends the UDR request to the HSS/SLF (referring to 3GPP TS 29.328) after receiving the third party registration request, to request for obtaining the supplementary service data.

In step S1006, the HSS/SLF sends the query request to the provisioning transaction management entity, to obtain Repository Data required in the user data request (referred to as UDR), as shown in table 1.

**Table 1 Definition of Repository Data (3GPP TS 29.328)**

| Data type | Tag | Compound of | | |
|---|---|---|---|---|
| | | Tag | Type | Cardinality |
| tSh-Data | Sh-Data | PublicIdentifiers | tPublicIdentity | 0 to 1 |
| | | RepositoryData | tTransparentData | 0 to n |
| | | Sh-IMS-Data | tShIMSData | 0 to 1 |
| | | CSLocationInformation | tCSLocationInformation | 0 to 1 |
| | | PSLocationInformation | tPSLocationInformation | 0 to 1 |
| | | CSUserState | tCSUserState | 0 to 1 |
| | | PSUserState | tPSUserState | 0 to 1 |
| | | Extension | tSh-Data-Extension | 0 to 1 |
| tSh-Data-Extension | Extension | Registered Identites | tPublicIdentity | 0 to 1 |
| | | ImplicitIdentities | tPublicIdentity | 0 to 1 |
| | | AllIdentities | tPublicIdentity | 0 to 1 |
| | | AliasIdentities | tPublicIdentity | 0 to 1 |
| | | | | |
| | | Extension | tSh-Data-Extension2 | 0 to 1 |
| tSh-Data-Extension2 | Extension | DeletedIdentities | tPublicIdentity | 0 to 1 |
| | | Extension | tSh-Data-Extension3 | 0 to 1 |
| tSh-Data-Extension3 | Extension | TADSinformation | tTADSinformation | 0 to 1 |
| | | Extension | tSh-Data-Extension4 | 0 to 1 |
| tSh-Data-Extension4 | Extension | EPSUserState | tPSUserState | 0 to 1 |
| | | EPSLocationInformation | tEPSLocation-Information | 0 to 1 |
| | | Extension | tSh-Data-Extension | 0 to 1 |
| tSh-Data-Extension5 | Extension | IMSI | tIMSI | 0 to 1 |
| tTransparentData | Repository Data | ServiceIndication | string | 1 |
| | | SequenceNumber | tSequenceNumber | 1 |
| | | ServiceData | tServiceData | 0 to 1 |
| tServiceData | any | any | any | 1 |
| | | | | |

ServiceData Supplementary service data sample (3GPP TS 29.364)

```
<?xml version="1.0" encoding="UTF-8"?>
 <Sh-Data>
   <RepositoryData>
       <ServiceInd ication> MMTEL-Services</ServiceIndication>
       <SequenceNumber>0</SequenceNumber>
       <ServiceData>
                <MMTelServices
                xmlns:cp="um:ietf:params:xml:ns:common-policy"
                xmlns:ss="http://uri.etsi.org/ngn/params/xml/simservs/xcap">
                    <version>1</version>
                    <complete-originating-identity-presentation>
                        <originating-identity-presentation active="true"/>
                        <operator-originating-identity-presentation
                        authorized="true">
                        <restriction-override>override-inactive</restriction-override>
                        </operator-originating-identity-presentation>
                    </complete-originating-identity-presentation>
                </MMTeIServices>
            </ServiceDala>
       </RepositoryData>
   </Sh-Data>
```

In step S1008, the provisioning transaction management entity returns the MMTel information to the HSS/SLF.

In step S1010, the HSS/ subscription locator function (referred to as SLF) returns the result to the MMTel AS.

In step S1012, the MMTel AS returns a response of third party successful registration, 200 OK, to the S-CSCF.

Till now, the registration process of the user in the IMS is completed, and the MMTel service can be realized.

FIG. 11 shows a user registration process after the service provisioning, by taking provisioning the MMTel voice service as an example, herein, the MMTel AS reads data directly from the provisioning transaction management entity. Specific steps are as follows.

It is required to execute the following steps before executing the steps shown in FIG. 11: when the user can login the IMS, the S-CSCF receives the registration request of the user, and sends the UAR request for obtaining the user information to the HSS (referring to 3GPP TS 29.228), to request for authenticating the data; the HSS sends the query request to the provisioning transaction management entity, to obtain the information required in the UAR request; the HSS/SLF returns a UAA response to the S-CSCF, and the S-CSCF continues the normal registration process; when the user successfully registers, the S-CSCF sends a server assignment request (referred to as SAR) to the HSS/SLF, to request for the service triggering data of the user, such as, iFC, etc.; the HSS/SLF sends the query request to the provisioning transaction management entity, to obtain the information required in the UAR request; and the HSS returns the result to the S-CSCF.

As shown in FIG. 11, the method can further include the following processing steps.

In step S1102, the S-CSCF sends an SIP REGISTER request to the MMTel AS for third party registration.

In step S1104, the MMTel AS sends the query request to the provisioning transaction management entity after receiving the third party registration request, to request for obtaining the supplementary service data.

Supplementary service data sample (3GPP TS 29.364)

```
<?xml version="1.0" encoding="UTF-8"?>
   <Sh-Data>
       <RepositoryData>
            <ServiceIndication>MMTEL-Services</ServiceIndication>
           <SequenceNumber>0</SequenceNumber>
           <ServiceData>
                <MMTelServices
                xmlns:cp="um:ietf:params:xml:ns:common-policy"
                xmlns:ss="http://uri.etsi.org/ngn/params/xml/simservs/xcap">
                    <version>1</version>
                    <complete-originating-identity-presentation>
                        <originating-identity-presentation active="true"/>
                        <operator-originating-identity-presentation
                        authorized="true">
                        <restriction-override>override-inactive</restriction-override>
                        </operator-originating-identity-presentation>
                </complete-originating-identity-presentation>
           </MMTelServices>
       </ServiceData>
   </RepositoryData>
   </Sh-Data>
```

In step S1106, the MMTel AS returns a response of third party successful registration, 200 OK, to the S-CSCF.

FIG. 12 shows the user registration process after the service provisioning, by taking the S-CSCF reading data from the provisioning transaction management entity indirectly through the HSS as an example. Specific steps are as follows.

In step S1202, when the user can login the IMS, the S-CSCF receives the registration request of the user, and sends the UAR request for obtaining the user information to the HSS (referring to 3GPP TS 29.228), to request for authenticating the data.

In step S1204, the HSS sends a query request (to query authentication information of the user) to the provisioning transaction management entity, to obtain the information required in the UAR request.

In step S1206, the HSS returns a UAA response (carrying the user authorization answer, referred to as UAA) to the S-CSCF, and the S-CSCF continues the normal registration process.

In step S1208, when the user successfully registers, the S-CSCF sends the SAR request to the HSS, to request for service triggering data of the user, such as, iFC, etc..

In step S1210, the HSS sends the query request to the provisioning transaction management entity, to obtain the information required in the UAR request, that is, to update the registration information of the user and download the service triggering information.

In step S1212, the HSS returns the result (SAA) to the S-CSCF.

To sum up, the embodiment of the present invention realizes the following technical effects: effectively solving the shortcomings, such as, low provisioning efficiency, poor reliability and expansion inconvenience, etc., in the existing IMS provisioning technology, and greatly enhancing the operateable ability of the IMS network, and the present scheme can be extended to other fields of communication, and has very high popularity.

In another embodiment, software is further provided which is used to implement the technical scheme described in the above embodiments and alternative embodiments.

In another embodiment, a storage medium is further provided, which stores the above software, and the storage medium includes, but not limited to: CD, floppy disk, hard disk, erasable memory, etc.

Apparently, it can be understood by those skilled in the art that each module or each step above-mentioned in the present invention can be implemented by the universal calculating apparatus, and they can be integrated in a single calculating apparatus, or distributed in the network formed by a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to a sequence different from here, or they are made into each integrated circuit module respectively, or a plurality of modules or steps therein are made into the single integrated circuit module to be implemented. In this way, the present invention is not limited to any specific form of the combination of the hardware and software.

The above description is only the alternative embodiments of the present invention and is not intended to limit the present invention. For those skilled in the art, the present invention can have various modifications and variations. All of modifications, equivalents and/or variations of the present invention should be embodied in the scope of the appended claims of the present invention.

### Industrial Applicability

As described above, through the above examples and the alternative embodiments, the technical problems, such as low provisioning efficiency, poor reliability, and service expansion inconvenience, etc., caused by the greater quantity of network elements involved in the existing IMS service provisioning process, are solved, thus performance of an IMS network is improved.

## Claims

1. A service provisioning method in an internet protocol IP multimedia subsystem IMS, realized through configuring a provisioning transaction management entity in the IMS, wherein provisioning information required by various network elements in the IMS during a provisioning process of a designated IMS service is stored in the provisioning transaction management entity, and the provisioning information comprises:
user data obtained from the service support system in the IMS, data obtained from a telephone number mapping ENUM server or a domain name server DNS, and service information obtained from an application server AS;
the method comprising:
during a service provisioning process, the provisioning transaction management entity receiving (S502) query requests of various network elements in the IMS; and
the provisioning transaction management entity sending (S504) provisioning information corresponding to the query requests to the various network elements;
wherein before the step of the provisioning transaction management entity sending (S504) provisioning information corresponding to the query requests to the various network elements, the method comprises:
when a user initiates a service provisioning request, the service support system provisioning the user data to the provisioning transaction management entity (Step 101, S902);
the service support system provisioning the data obtained from the ENUM server to the provisioning transaction management entity (Step 102, S904);
the service support system provisioning the service information obtained from the AS to the provisioning transaction management entity (Step 103, S906).

2. The method according to claim 1, wherein, the provisioning information stored in the provisioning transaction management entity is obtained by the following mode:
storing the provisioning information of the various network elements into the provisioning transaction management entity through a service support system in the IMS.

3. The method according to claim 1, wherein, a format of the provisioning information stored in the provisioning transaction management entity is same with that of the information required by the various network elements during a provisioning process of an IMS service.

4. A provisioning transaction management entity in an internet protocol IP multimedia subsystem IMS, wherein:
the service provisioning transaction management entity is arranged to store provisioning information required by the various network elements during the IMS during a provisioning process of a designated IMS service, wherein the provisioning information comprises: user data obtained from the service support system in the IMS, data obtained from a telephone number mapping ENUM server or a domain name server DNS, and service information obtained from an application server AS;
the service provisioning transaction management entity comprises:
a receiving module (60), which is arranged to: during a service provisioning process, receive query requests of various network elements in an internet protocol IP multimedia subsystem IMS; and
a sending module (62), which is arranged to send provisioning information corresponding to the query requests to the various network elements;
wherein the service provisioning transaction management entity is further arraged to, when a user initiates a service provisioning request, be provisioned with the user data, the data obtained from the ENUM server, and the service information obtained from the AS by the service support system.

5. An internet protocol IP multimedia subsystem IMS comprising a service support system (70), a provisioning transaction management entity (72) according to claim 8 and various network elements,
wherein the service support system (70) is arranged to provision all provisioning information required by the various network elements during a provisioning process of a designated IMS service to the provisioning transaction management entity by: when a user initiates a service provisioning request, provisioning the user data to the provisioning transaction management entity; provisioning the data obtained from the ENUM server to the provisioning transaction management entity; and, provisioning the service information obtained from the AS to the provisioning transaction management entity;
the various network elements are arranged to directly or indirectly request the provisioning information from the provisioning transaction management entity and perform information interaction between the network elements to realize service provisioning.

6. The IMS according to claim 5, wherein, the various network elements comprise:
a user subscription data storage entity (740), arranged to read user data stored in the provisioning transaction management entity during the provisioning process;
an application server (742), arranged to read service data stored in the provisioning transaction management entity directly or through the user subscription data storage entity during the provisioning process, and realize a corresponding service according to the service data; and
a telephone number mapping ENUM server or a domain name server DNS (744), arranged to read a mapping relationship between a telephone uniform resource identifier TEL URI and a session initiation protocol uniform resource identifier SIP URI stored in the provisioning transaction management entity and DNS data during the provisioning process.

7. The IMS according to claim 6, wherein,
the user subscription data storage entity (740) is further arranged to receive a user authorization request UAR sent by a serving call session control function S-CSCF entity according to a received user registration request, and send a query request used for querying user information to the provisioning transaction management entity, and send a response message of the UAR request to the S-CSCF entity, wherein, the response message carries the user information.

8. The IMS according to claim 7, wherein,
the application server (742) is further arranged to receive a service request from a server of the S-CSCF entity; and send a query request used for obtaining service data to the provisioning transaction management entity directly or through the user subscription data storage entity; and/or,
the user subscription data storage entity (740) is further arranged to receive a request message from the S-CSCF entity, and request the service data from the provisioning transaction management entity, wherein, the S-CSCF entity sends the request message after successful registration of the user.

9. The IMS according to any one of claims 5 to 8, wherein,
the provisioning transaction management entity (72) is further arranged to negotiate with the various network elements to determine a format of the provisioning information, wherein, the determined format after negotiation is consistent with a format of provisioning information required by the various network elements.

## Patentansprüche

1. Verfahren zum Erbringen von Diensten in einem IP-Multimedia-Subsystem IMS, realisiert durch Konfigurieren eines Diensttransaktions-Verwaltungselements im IMS, wobei Dienstdaten, die bei einem Dienstprozess eines dazu bestimmten IMS-Dienstes von verschiedenen Netzwerkelementen des IMS benötigt werden, im Verwaltungselement gespeichert werden und die Dienstdaten umfassen:
Nutzerdaten, die vom Dienstunterstützungssystem des IMS erhalten werden, Daten, die von einem ENUM-Server oder einem DNS erhalten werden, und Dienstdaten, die von einem Anwendungsserver AS erhalten werden, wobei das Verfahren umfasst:
Empfangen (S502) von Query-Anfragen verschiedener Netzwerkelemente des IMS durch das Verwaltungselement bei einem Dienstprozess und
Senden (S504) von Dienstdaten, die den Query-Anfragen entsprechen, durch das Verwaltungsleement an die verschiedenen Netzwerkelemente,
wobei das Verfahren vor dem Senden von Dienstdaten, die den Query-Anfragen entsprechen, durch das Verwaltungsleement an die verschiedenen Netzwerkelemente umfasst:
Bereitstellen der Nutzerdaten an das Verwaltungselement durch das Dienstunterstützungssystem (Schritt 101, S902), wenn ein Nutzer eine Dienstanforderung einleitet,
Bereitstellen der vom ENUM-Server erhaltenen Daten durch das Dienstunterstützungssystem an das Verwaltungselement (Schritt 102, S904),
Bereitstellen der vom AS erhaltenen Dienstdaten durch das Dienstunterstützungssystem an das Verwaltungselement (Schritt 103, S906).

2. Verfahren nach Anspruch 1, wobei die im Verwaltungselement gespeicherten Dienstdaten auf folgende Weise erhalten werden:
Speichern der Dienstdaten der verschiedenen Netzwerkelemente im Verwaltungselement über ein Dienstunterstützungssystem des IMS.

3. Verfahren nach Anspruch 1, wobei ein Format der im Verwaltungselement gespeicherten Dienstdaten gleich dem der von den verschiedenen Netzwerkelementen bei einem Dienstprozess eines IMS-Dienstes benötigten Daten ist.

4. Diensttransaktions-Verwaltungselement in einem IP-Multimedia-Subsystem IMS, wobei:
das Verwaltungselement derart angeordnet ist, dass es Dienstdaten speichert, die bei einem Dienstprozess eines dazu bestimmten IMS-Dienstes von den verschiedenen Netzwerkelementen benötigt werden, wobei die Dienstdaten umfassen:
Nutzerdaten, die vom Dienstunterstützungssystem des IMS erhalten werden, Daten, die von einem ENUM-Server oder einem DNS erhalten werden, und Dienstdaten, die von einem Anwendungsserver AS erhalten werden,
wobei das Verwaltungselement umfasst:
ein Empfangsmodul (60), das derart angeordnet ist, dass es bei einem Dienstprozess Query-Anfragen verschiedener Netzwerke eines IP-Multimedia-Subsystems IMS emfpängt, und
ein Sendemodul (62), das derart angeordnet ist, dass es den verschiedenen Netzwerkelementen Dienstdaten sendet, die den Query-Anfragen entsprechen,
wobei das Verwaltungselement ferner derart angeordnet ist, dass es mit den Nutzerdaten, den vom ENUM-Server erhaltenen Daten und den durch das Dienstunterstützungssystem vom AS erhaltenen Dienstdaten versorgt wird.

5. IP-Multimedia-Subsystem IMS, umfassend:
ein Dienstunterstützungssystem (70), ein Diensttransaktions-Verwaltungselement (72) nach Anspruch 8 und verschiedene Netzwerkelemente,
wobei das Dienstunterstützungssystem (70) derart angeordnet ist, dass es dem Verwaltungselement alle Dienstdaten, die bei einem Dienstprozess eines dazu bestimmten IMS-Dienstes von den verschiedenen Netzwerkelementen benötigt werden, bereitstellt durch: Bereitstellen der Nutzerdaten an das Verwaltungselement, wenn ein Nutzer eine Dienstanfrage einleitet, Bereitstellen der vom ENUM-Server erhaltenen Daten an das Verwaltungselement und Bereitstellen der vom AS erhaltenen Dienstdaten an das Verwaltungselement,
wobei die verschiedenen Netzwerkelemente derart angeordnet sind, dass sie die Dienstdaten mittelbar oder unmittelbar beim Verwaltungselement anfordern und Dateninteraktionen zwischen den Netzwerkelementen vollziehen, um den Dienst zu erbringen.

6. IMS nach Anspruch 5, wobei die verschiedenen Netzwerkelemente umfassen:
ein Abonnementdatenspeicherelement (740), das derart angeordnet ist, dass es beim Dienstprozess Nutzerdaten abliest, die im Verwaltungselement gespeichert sind,
einen Anwendungsserver (742), der derart angeordnet ist, dass er beim Dienstprozess Dienstdaten, die im Verwaltungselement gespeichert sind, unmittelbar oder über das Datenspeicherelement abliest und gemäß den Dienstdaten einen entsprechenden Dienst erbringt, und
einen ENUM-Server oder DNS (744), der derart angeordnet ist, dass er eine Abbildungsbeziehung zwischen einer Telefon-URI TEL URI und einer im Verwaltungselement gespeicherten SIP (Session Initiation Protocol) URI und DNS-Daten beim dienstprozess abliest.

7. IMS nach Anspruch 6, wobei:
das Speicherelement (740) ferner derart angeordnet ist, dass es eine von einem S-CSCF-Element (Serving Call Session Control Function) gesendete Nutzerautorisierungsanforderung UAR gemäß einer eingegangenen Nutzeranmeldungsanfrage empfängt und dem Verwaltungselement eine Query-Anfrage sendet, die zum Abfragen von Nutzerdaten benutzt wird, und dem S-CSCF-Element eine Antwort auf die UAR sendet, wobei die Antwort die Nutzerdaten enthält.

8. IMS nach Anspruch 7, wobei:
der Anwendungsserver (742) ferner derart angeordnet ist, dass er eine Dienstanforderung von einem Server des S-CSCF-Elements empfängt und dem Verwaltungselement unmittelbar oder über das Speicherelement eine Query-Anfrage, die zum Erhalten von Dienstdaten benutzt wird, sendet, und/oder
das Speicherelement (740) ferner derart angeordnet ist, dass es eine Anfragenachricht vom S-SCSF-Element empfängt und die Dienstdaten beim Verwaltungselement anfordert, wobei das S-CSCF-Element die Anfragenachricht nach erfolgreicher Anmeldung des Nutzers sendet.

9. IMS nach einem der Ansprüche 5 - 8, wobei
das Verwaltungselement (72) ferner derart angeordnet ist, dass es mit den verschiedenen Netzwerkelementen verhandelt, um ein Format der Dienstdaten zu ermitteln, wobei das ermittelte Format nach der Verhandlung mit einem Format von Dienstdaten, die von den verschiedenen Netzwerkelementen benötigt werden, übereinstimmt.

## Revendications

1. Procédé de fourniture de services dans un sous-système multimédia de protocole Internet, IP, IMS, mis en œuvre par la configuration d'une entité de gestion de transactions de provisionnement de services dans le sous-système IMS, dans lequel des informations de provisionnement, requises par divers éléments de réseau dans le sous-système IMS au cours d'un processus de provisionnement d'un service de sous-système IMS désigné, sont stockées dans l'entité de gestion de transactions de provisionnement de services, et dans lequel les informations de provisionnement comprennent : des données d'utilisateur obtenues auprès du système de prise en charge de services dans le sous-système IMS, des données obtenues auprès d'un serveur de mappage des numéros de téléphone, ENUM, ou d'un serveur de noms de domaine, DNS, et des informations de services obtenues auprès d'un serveur d'applications, AS ;
le procédé comprenant les étapes ci-dessous dans lesquelles :
au cours d'un processus de provisionnement de services, l'entité de gestion de transactions de provisionnement de services reçoit (S502) des demandes d'interrogation de divers éléments de réseau dans le sous-système IMS ; et
l'entité de gestion de transactions de provisionnement de services envoie (S504) des informations de provisionnement correspondant aux demandes d'interrogation aux divers éléments de réseau ;
dans lequel, avant l'étape d'envoi (S504), par le biais de l'entité de gestion de transactions de provisionnement de services, d'informations de provisionnement correspondant aux demandes d'interrogation, aux divers éléments de réseau, le procédé comprend les étapes ci-dessous dans lesquelles :
lorsqu'un utilisateur initie une demande de provisionnement de services, le système de prise en charge de services fournit les données d'utilisateur à l'entité de gestion de transactions de provisionnement de services (étape 101, S902) ;
le système de prise en charge de services fournit les données obtenues auprès du serveur de mappage ENUM à l'entité de gestion de transactions de provisionnement de services (étape 102, S904) ;
le système de prise en charge de services fournit les informations de services obtenues auprès du serveur AS à l'entité de gestion de transactions de provisionnement de services (étape 103, S906).

2. Procédé selon la revendication 1, dans lequel les informations de provisionnement stockées dans l'entité de gestion de transactions de provisionnement de services sont obtenues en mettant en œuvre l'étape ci-dessous consistant à :
stocker les informations de provisionnement des divers éléments de réseau dans l'entité de gestion de transactions de provisionnement de services par le biais d'un système de prise en charge de services dans le sous-système IMS.

3. Procédé selon la revendication 1, dans lequel un format des informations de provisionnement stockées dans l'entité de gestion de transactions de provisionnement de services est identique à celui des informations requises par les divers éléments de réseau au cours d'un processus de provisionnement d'un service de sous-système IMS.

4. Entité de gestion de transactions de provisionnement dans un sous-système multimédia de protocole Internet, IP, IMS, dans laquelle :
l'entité de gestion de transactions de provisionnement de services est agencée de manière à stocker des informations de provisionnement requises par les divers éléments de réseau dans le sous-système IMS au cours d'un processus de provisionnement d'un service de sous-système IMS désigné, dans laquelle les informations de provisionnement comprennent : des données d'utilisateur obtenues auprès du système de prise en charge de services dans le sous-système IMS, des données obtenues auprès d'un serveur de mappage des numéros de téléphone, ENUM, ou d'un serveur de noms de domaine, DNS, et des informations de services obtenues auprès d'un serveur d'applications, AS ;
l'entité de gestion de transactions de provisionnement de services comprend :
un module de réception (60), qui est agencé de manière à : au cours d'un processus de provisionnement de services, recevoir des demandes d'interrogation de divers éléments de réseau dans un sous-système multimédia de protocole Internet, IP, IMS ; et
un module d'envoi (62), qui est agencé de manière à envoyer des informations de provisionnement, correspondant aux demandes d'interrogation, aux divers éléments de réseau ;
dans laquelle l'entité de gestion de transactions de provisionnement de services est en outre agencée de manière à, lorsqu'un utilisateur initie une demande de provisionnement de services, être provisionnée avec les données d'utilisateur, les données obtenues auprès du serveur de mappage ENUM, et les informations de services obtenues auprès du serveur AS par le système de prise en charge de services.

5. Sous-système multimédia de protocole Internet, IP, IMS, comprenant un système de prise en charge de services (70), une entité de gestion de transactions de provisionnement de services (72) selon la revendication 8, et divers éléments de réseau ;
dans lequel le système de prise en charge de services (70) est agencé de manière à fournir toutes les informations de provisionnement requises par les divers éléments de réseau, au cours d'un processus de provisionnement d'un service de sous-système IMS désigné, à l'entité de gestion de transactions de provisionnement de services, en mettant en œuvre les étapes ci-après consistant à : lorsqu'un utilisateur initie une demande de provisionnement de services, fournir les données d'utilisateur à l'entité de gestion de transactions de provisionnement de services ; fournir les données obtenues auprès du serveur de mappage ENUM, à l'entité de gestion de transactions de provisionnement de services ; et fournir les informations de services obtenues auprès du serveur AS, à l'entité de gestion de transactions de provisionnement de services ;
les divers éléments de réseau sont agencés de manière à demander, directement ou indirectement, les informations de provisionnement, à l'entité de gestion de transactions de provisionnement de services, et à mettre en œuvre une interaction d'informations entre les éléments de réseau en vue de mettre en œuvre le provisionnement de services.

6. Sous-système IMS selon la revendication 5, dans lequel les divers éléments de réseau comprennent :
une entité de stockage de données d'abonnement d'utilisateur (740), agencée de manière à lire des données d'utilisateur stockées dans l'entité de gestion de transactions de provisionnement de services au cours du processus de provisionnement ;
un serveur d'applications (742), agencé de manière à lire des données de service stockées dans l'entité de gestion de transactions de provisionnement de services, directement, ou par l'intermédiaire de l'entité de stockage de données d'abonnement d'utilisateur au cours du processus de provisionnement, et à mettre en œuvre un service correspondant selon les données de service ; et
un serveur de mappage des numéros de téléphone, ENUM, ou un serveur de noms de domaine, DNS, (744), agencé de manière à lire une relation de mappage entre un identificateur de ressource uniforme de téléphone, TEL URI, et un identificateur de ressource uniforme de protocole d'ouverture de session, SIP URI, stockés dans l'entité de gestion de transactions de provisionnement de services, et des données de serveur DNS au cours du processus de provisionnement.

7. Sous-système IMS selon la revendication 6, dans lequel,
l'entité de stockage de données d'abonnement d'utilisateur (740) est en outre agencée de manière à recevoir une demande d'autorisation d'utilisateur, UAR, envoyée par une entité de fonction de commande de session d'appel de desserte, S-CSCF, selon une demande d'enregistrement d'utilisateur reçue, et à envoyer une demande d'interrogation utilisée en vue d'interroger des informations d'utilisateur, à l'entité de gestion de transactions de provisionnement de services, et envoyer un message de réponse à la demande d'autorisation UAR, à l'entité de fonction S-CSCF, dans lequel le message de réponse contient les informations d'utilisateur.

8. Sous-système IMS selon la revendication 7, dans lequel,
le serveur d'applications (742) est en outre agencé de manière à recevoir une demande de service en provenance d'un serveur de l'entité de fonction S-CSCF ; et à envoyer une demande d'interrogation utilisée en vue d'obtenir des données de service, à l'entité de gestion de transactions de provisionnement de services, directement, ou par l'intermédiaire de l'entité de stockage de données d'abonnement d'utilisateur ; et/ou
l'entité de stockage de données d'abonnement d'utilisateur (740) est en outre agencée de manière à recevoir un message de demande en provenance de l'entité de fonction S-CSCF, et à demander les données de service à l'entité de gestion de transactions de provisionnement de services, dans lequel l'entité de fonction S-CSCF envoie le message de demande après l'enregistrement réussi de l'utilisateur.

9. Sous-système IMS selon l'une quelconque des revendications 5 à 8, dans lequel,
l'entité de gestion de transactions de provisionnement de services (72) est en outre agencée de manière à négocier avec les divers éléments de réseau en vue de déterminer un format des informations de provisionnement, dans lequel le format déterminé après négociation est conforme à un format d'informations de provisionnement requis par les divers éléments de réseau.
